# EUROPÄISCHE PATENTSCHRIFT

(11) **EP 3 584 142 B1**
(45) Veröffentlichungstag und Bekanntmachung des Hinweises auf die Patenterteilung: **18.05.2022**
(21) Anmeldenummer: 19176105.5
(22) Anmeldetag: 23.05.2019
(51) Int. Cl.: B62D 15/02, B62D 13/06

(54) **VERFAHREN ZUM ERMITTELN EINER SOLL-TRAJEKTORIE FÜR DIE DURCHFÜHRUNG EINES RANGIERVORGANGES MIT EINEM FAHRZEUGGESPANN**
METHOD FOR DETERMINING A TARGET TRAJECTORY FOR CARRYING OUT A SHUNTING PROCESS WITH A VEHICLE SET
PROCÉDÉ DE DÉTERMINATION D'UNE TRAJECTOIRE DE CONSIGNE POUR LA RÉALISATION D'UNE MAN UVRE D'UN ATTELAGE DE VÉHICULE

(30) Priorität: 14.06.2018 DE 102018114214
(43) Veröffentlichungstag der Anmeldung: 25.12.2019
(73) Patentinhaber: Valeo Schalter und Sensoren GmbH, 74321 Bietigheim-Bissingen (DE)
(72) Erfinder: KOUDIJS, Gerald, 74321 Bietigheim-Bissingen (DE); BOURGUIBA, Rim, 74321 Bietigheim-Bissingen (DE); HAMMAD, Mohanad, 0000 Cairo (EG); BENSEMANN, Rolf, 74321 Bietigheim-Bissingen (DE)
(74) Vertreter: Pothmann, Karsten

(56) Entgegenhaltungen:
- WO-A2-2015/001066
- DE-A1-102016 109 852

## Beschreibung

Die vorliegende Erfindung betrifft ein Verfahren zum Ermitteln einer Soll-Trajektorie für die Durchführung eines Rangiervorganges mit einem Fahrzeuggespann, wie beispielsweise ein Zugfahrzeug mit einem Anhänger.

Die Erfindung betrifft ebenfalls ein Verfahren zum Rangieren eines Fahrzeuggespanns, das das Verfahren zur Ermitteln der Soll-Trajektorie einsetzt.

Die Erfindung betrifft auch ein Fahrunterstützungssystem zur Durchführung eines Rangiervorganges mit einem Fahrzeuggespann, das das erfindungsgemäße Verfahren einsetzt.

Das Rangieren mit einem Fahrzeuggespann stellt erhöhte Ansprüche an einen Fahrer, da insbesondere beim Rückwärtsfahren die Sicht durch den Anhänger eingeschränkt ist und das Fahrzeuggespann zum Einknicken neigt. Beim Einknicken des Fahrzeuggespanns bei einer geraden Rückwärtsfahrt befindet sich der Anhänger nicht mehr auf einer gedachten Linie zum Zugfahrzeug. Das Einlenken des Anhängers ausgehend von der geraden Rückwärtsfahrt um eine Kurve stellt insbesondere für ungeübte Fahrer eine Herausforderung dar, da der Fahrer zunächst in die der Kurve entgegengesetzte Richtung lenken muss, um den Anhänger in eine geeignete Position für das Fahren entlang der Kurve zu bringen. Dabei muss der Fahrer durch permanente Lenkbewegungen sicherstellen, dass sich der Anhänger nicht von einer gewünschten Fahrspur wegbewegt.

Fahrunterstützungssysteme zur Durchführung eines (teil-)autonomen Rangiervorganges mit einem Fahrzeuggespann sind auf dem Gebiet bereits bekannt. Sie verfolgen als Ziel, das Rangieren mit dem Fahrzeuggespann zu erleichtern. Üblicherweise umfassen die Fahrunterstützungssysteme eine Umfeldsensorik zur Erfassung einer Umgebung des Fahrzeuggespanns, auf deren Basis eine Soll-Trajektorie, die vom Fahrzeuggespann abgefahren werden kann, ermittelt wird.

Beispielsweise beschreibt die DE 10 2014 013 219 A1 ein Assistenzsystem, das mehrere Fahrmanöver mit unterschiedlichen Trajektorien aufweist und einer Person wenigstens eines der Fahrmanöver zur Auswahl stellt. Dieses Fahrmanöver kann im Anschluss mittels des Assistenzsystems halb-automatisch oder voll-automatisch durchgeführt werden.

Die DE 10 2013 016 342 A1 beschreibt ein Fahrerassistenzsystem, bei dem ein Soll-Lenkwinkel vom Nutzer eingegeben wird, aufgrund dessen das Fahrerassistenzsystem eine Soll-Bahn bestimmt. Des Weiteren wird vom Fahrerassistenzsystem aufgrund des aktuellen Lenkwinkels eine Ist-Bahn bestimmt. Die Ist- und die Soll-Bahn werden dem Nutzer in einem Videobild, das einen Bereich hinter dem Anhänger darstellt, in unterscheidbarer Weise eingeblendet. Das Fahrerassistenzsystem kann einen teilautonomen oder autonomen Fahrvorgang entlang dieser Soll-Bahn durchführen.

Ein aus der EP 2 634 071 B1 bekanntes Verfahren und Vorrichtung zur Steuerung des Rangiervorganges umfasst eine Fahrzeugsensorik und eine Anhängersensorik zur Erfassung einer Ist-Position und Ist-Lage sowie eine Umfeldsensorik zur Erfassung der rückwertigen Gespannumgebung. Aus diesen Daten wird eine Ziel-Position und Ziel-Lage des Fahrzeuggespanns ermittelt und eine Bahnkurve bestimmt, auf der das Fahrzeuggespann von der Ist-Position und Ist-Lage in die Ziel-Position und Ziel-Lage rangierbar ist.

Die WO2015001066 A2 zeigt ein Verfahren zum Ermitteln einer Soll-Trajektorie gemäß Oberbegriff des Anspruchs 1.

Ausgehend von dem oben genannten Stand der Technik liegt der Erfindung die Aufgabe zugrunde, Verfahren und ein Fahrunterstützungssystem der oben genannten Art bereitzustellen, mittels welchen sich ein besonders einfaches und komfortables Rangieren mit einem Fahrzeuggespann realisieren lässt.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist also ein Verfahren zum Ermitteln einer Soll-Trajektorie mit wenigstens einem Trajektorienabschnitt für die Durchführung eines Rangiervorganges mit einem Fahrzeuggespann, das ein Zugfahrzeug und einen Anhänger, die über eine Gelenkkupplung miteinander verbunden sind, aufweist, angegeben, das einen Schritt zum Erstellen wenigstens eines Trajektorienabschnitts umfasst, wobei das Erstellen des wenigstens einen Trajektorienabschnitts ein Aneinanderreihen von Segmenten umfasst, wobei die Segmente Geradenabschnitte, Klothoidenabschnitte und/oder Kreisbögen umfassen und das Erstellen des wenigstens einen Trajektorienabschnitts ein Erstellen eines zwischen einem jeweiligen Start- und Endpunkt differenzierbaren Trajektorienabschnitts mit einem stetigen Krümmungsverlauf umfasst.

Der Grundgedanke der Erfindung ist ein Verfahren zum Ermitteln einer Soll-Trajektorie, wobei die Soll-Trajektorie ein besonders einfaches und komfortables Durchführen eines Rangiervorganges mit einem Fahrzeuggespann ermöglicht. Das Erstellen des wenigstens einen Trajektorienabschnittes umfasst ein Aneinanderreihen von Segmenten, wobei die Segmente aus den Geradenabschnitten, Klothoidenabschnitten und/oder Kreisbögen gewählt werden können. Hierdurch wird der Lenkvorgang entlang der Soll-Trajektorie besonders komfortabel, denn während des Befahrens eines Geradenabschnittes bzw. eines Kreisbogens ist keine Lenkbewegung erforderlich. Das Befahren eines Klothoidenabschnittes erfordert bei konstanter Geschwindigkeit eine Lenkbewegung, die mit einer konstanten Winkelgeschwindigkeit durchgeführt wird. Dadurch, dass der wenigstens eine Trajektorienabschnitt zwischen einem jeweiligen Start- und Endpunkt differenzierbar ist, weist er keine Knicke auf, die üblicherweise ein Befahren des wenigstens einen Trajektorienabschnitts erschweren. Genauso ist damit sichergestellt, dass der wenigstens eine Trajektorienabschnitt stetig ist, also keine Lücken aufweist. Um beim Befahren auch einen stetigen Lenkverlauf zu ermöglichen, also das Lenkrad nicht sprunghaft von einer Auslenkung zu einer anderen Auslenkung überführen zu müssen, weist der wenigstens eine Trajektorienabschnitt einen stetigen Krümmungsverlauf auf. Dies führt dazu, dass ein Kreisbogen nicht direkt an einen Geradenabschnitt angrenzt, da ein solcher Übergang keinen stetigen Krümmungsverlauf aufweist. Genauso grenzt ein Kreisbogen mit einer bestimmten Krümmung nicht an einen weiteren Kreisbogen mit einer anderen Krümmung. Hingegen kann durch ein Verbinden eines Geradenabschnittes mit einem Kreisbogen durch wenigstens einen Klothoidenabschnitt, sichergestellt werden, dass der Trajektorienabschnitt einen stetigen Krümmungsverlauf aufweist. Genauso kann durch ein Verbinden zweier Kreisbögen mit wenigstens einem Klothoidenabschnitt, sichergestellt werden, dass der Trajektorienabschnitt einen stetigen Krümmungsverlauf ausweist. Ebenfalls kann durch ein Verbinden zweier Geradenabschnitte mit beispielsweise wenigstens zwei Klothoidenabschnitten, sichergestellt werden, dass der Trajektorienabschnitt einen stetigen Krümmungsverlauf ausweist. Prinzipiell ist es bereits ausreichend, wenn zwei Klothoidenabschnitte zu dem Trajektorienabschnitt mit dem stetigen Krümmungsverlauf aneinandergereiht werden.

Das im erfindungsgemäßen Verfahren betrachtete Fahrzeuggespann besteht aus einem Zugfahrzeug und einem Anhänger. Das Zugfahrzeug kann ein beliebiges Fahrzeug sein, vorzugsweise ein Personenwagen oder ein Lastwagen. Das Fahrzeug kann teilautonom oder vollautonom fahren und kann menschliche Passagiere, einschließlich eines Fahrers, transportieren oder nicht. Der Anhänger kann beispielsweise ein oder zwei Achsen aufweisen. Der Anhänger ist mit dem Zugfahrzeug über eine Gelenkkupplung verbunden. Dies kann eine beliebige Gelenkkupplung sein, die ermöglicht, dass der Anhänger dem Zugfahrzeug gelenkig folgt. Beispielsweise kann die Gelenkkupplung eine Kugelkopfkupplung sein.

Ein Rangiervorgang umfasst wenigstens ein Vorwärts- und ein Rückwärtsfahren über eine typischerweise kurze Distanz bei einer niedrigen Geschwindigkeit, beispielsweise Schrittgeschwindigkeit. Der Rangiervorgang umfasst erfindungsgemäß ein Rangiervorgang in mehreren Zügen, also wenigstens ein Vorwärts- und ein Rückwärtsfahren. Die Durchführung des Rangiervorgangs ermöglicht es, das Fahrzeuggespann von einer Startposition in eine Zielposition zu bringen.

Die Soll-Trajektorie verbindet die Startposition des Fahrzeuggespanns mit der Zielposition des Fahrzeuggespanns in einer stetigen Art und Weise, also ohne Lücken aufzuweisen. Die Startposition des Fahrzeuggespanns kann dabei die aktuelle Position des Fahrzeuggespanns sein. Die Zielposition kann eine Parklücke sein, die beispielsweise Umgebungssensoren erkannt wird. Die Soll-Trajektorie umfasst wenigstens einen Trajektorienabschnitt, wobei jeder Trajektorienabschnitt einen Anfangs- und Endpunkt aufweist. Der Endpunkt eines Trajektorienabschnitt ist dabei der Anfangspunkt eines nachfolgenden Trajektorienabschnitts.

Beim Durchführen des Rangiervorganges folgt der Anhänger der Soll-Trajektorie.

Dementsprechend ist die durch das Verfahren ermittelte Soll-Trajektorie als eine Soll-Trajektorie für den Anhänger aufzufassen. Im Gegensatz zu dem Anhänger folgt das Zugfahrzeug während des Rangiervorganges nicht zwingend der Soll-Trajektorie, denn bei einer Rückwärtsfahrt des Fahrzeuggespanns wird das Zugfahrzeug dazu genutzt den Anhänger auf der Soll-Trajektorie zu steuern.

Ein Kreisbogen ist ein Abschnitt eines eindimensionalen Objekts, wobei der Abschnitt eine konstante Krümmung aufweist. Ein Geradenabschnitt ist ein Abschnitt eines eindimensionalen Objekts, wobei der Abschnitt eine konstante Krümmung von Null aufweist. Ein Klothoidenabschnitt ist ein Abschnitt eines eindimensionalen Objekts, wobei die Krümmung des Abschnittes sich proportional zur Länge des Abschnitts verändert. Der Klothoidenabschnitt kann prinzipiell bei einer beliebigen Krümmung beginnen und enden, wobei der Klothoidenabschnitt an seinem Anfang eine Krümmung von Null aufweisen kann. Auch kann die Krümmung entlang des Klothoidenabschnitts zunehmen oder abnehmen.

Grundsätzlich, aber nicht erfindungsgemäß, kann es sein, dass ein Rangiervorgang durch das Befahren eines einzelner Trajektorienabschnitts beendet ist. In diesem Fall entspricht die Startposition des Fahrzeuggespanns dem Anfangspunkt des Trajektorienabschnitts und die Zielposition des Fahrzeuggespanns dem Endpunkt des Trajektorienabschnitts. Gemäß der Erfindung umfasst das Ermitteln der Soll-Trajektorie jedoch ein Erstellen von einer Mehrzahl von verbundenen Trajektorienabschnitten zum Rangieren in mehreren Zügen. Abhängig von der Start- und Zielposition und der Umgebung des Fahrzeuggespanns ist es erfindungsgemäß erforderlich, den Rangiervorgang in mehreren Zügen, als ein Vor- und Rückwärtsfahren des Fahrzeuggespanns, durchzuführen. Besonders beim rückwärts Rangieren führt das erfindungsgemäße Verfahren zu einer Soll-Trajektorie, die ein besonders einfaches und komfortables Rangieren des Fahrzeuggespanns ermöglicht.

Gemäß einer bevorzugten Weiterbildung der Erfindung umfasst das Erstellen des wenigstens einen Trajektorienabschnitts ein Verwenden von Kreisbögen und Klothoidenabschnitten, wobei deren Absolutbetrag ihrer Krümmung überall kleiner ist als ein Wert, der von wenigstens einer Abmessung des Zugfahrzeugs, von wenigstens einer Abmessung des Anhängers und/oder von wenigstens einer Abmessung der Gelenkkupplung abhängt. Bei einer Kurvenfahrt kann abhängig von Eigenschaften des Fahrzeuggespanns nur eine bestimmte maximale Krümmung gefahren werden. Dies kann durch die wenigstens einer Abmessung des Zugfahrzeugs, durch die wenigstens einer Abmessung des Anhängers und/oder durch die wenigstens einer Abmessung der Gelenkkupplung berücksichtigt werden. Dementsprechend werden bei der Planung auch nur Kreisbögen und Klothoidenabschnitte verwendet, die diese Krümmung nicht überschreiten.

Gemäß einer bevorzugten Weiterbildung der Erfindung umfasst das Erstellen des wenigstens einen Trajektorienabschnitts ein Verwenden von Klothoidenabschnitten, wobei ein Absolutbetrag einer Änderung ihrer Krümmung kleiner ist als ein Wert, der von wenigstens einer Abmessung des Zugfahrzeugs, von wenigstens einer Abmessung des Anhängers und von wenigstens einer Abmessung der Gelenkkupplung und/oder vom Winkel zwischen dem Anhänger und dem Zugfahrzeug auf einem vorherigen Segment abhängt. Insbesondere beim rückwärtigen Rangieren des Fahrzeuggespanns ist darauf zu achten, dass es nicht zu einem Abknicken des Anhängers kommt. Um ein Abknicken durch Lenkbewegungen beim Rangieren verhindern zu können, ist eine Lenkbewegung mit zu hoher Winkelgeschwindigkeit zu vermeiden. Dies bedeutet, dass die Änderung der Krümmung des Klothoidenabschnittes nicht zu groß sein darf. Wie stark sich die Krümmung ändern darf, kann nicht nur von den Abmessungen des Zugfahrzeugs, des Anhängers und der Gelenkkupplung abhängen und/oder von einem Winkel zwischen dem Zugfahrzeug und dem Anhänger auf einem vorherigen Segment. Es wird vorzugsweise davon ausgegangen, dass der Winkel zwischen Zugfahrzeug und Anhänger auf Segmenten mit konstanter Krümmung (Geradenabschnitten und Kreisbögen) dem Idealwinkel entspricht, der notwendig ist, um die entsprechende Krümmung zu fahren. Der Idealwinkel entspricht einem Winkel gemäß der Planung der Solltrajektorie.

Gemäß einer bevorzugten Weiterbildung der Erfindung umfasst das Verfahren einen Schritt zum Überprüfen der Soll-Trajektorie auf Kollisionen mit wenigstens einem Merkmal einer Umgebung des Fahrzeuggespanns. Ein Merkmal der Umgebung kann ein örtlich verschiebbares Objekt, wie zum Beispiel ein anders Fahrzeug oder ein Fußgänger sein. Ein Merkmal der Umgebung kann aber auch ein örtlich nicht verschiebbares Objekt, wie beispielsweise ein Baum, ein Pfosten oder eine Wand sein. Des Weiteren kann es sich bei einem Merkmal der Umgebung auch um eine Kante, wie zum Beispiel eine Bordsteinkante handeln. Genauso kann sich ein Merkmal einer Umgebung auch durch ein Fehlen eines befahrbaren Untergrundes auszeichnen, was hier als ein "negatives Objekt" bezeichnet werden soll. Beispiele für solche negativen Objekte sind ein Schlagloch oder ein Versatz im Gelände. Merkmale der Umgebung weisen sich dadurch aus, dass sie vom Fahrzeuggespann nicht überwunden werden können. Eine Kollision mit einem Merkmal der Umgebung kann ein physischer Kontakt des Fahrzeuggespanns an seinen Außenabmessungen mit dem Objekt sein, oder ein physischer Kontakt der Reifen des Fahrzeuggespanns mit dem Objekt, wie beispielsweis der Bordsteinkante. Bei einem negativen Objekt ist eine Kollision als ein Eindringen des Fahrzeuggespanns in den Bereich des Objektes zu verstehen. Dies würde in der Regel zu einem Zustand führen bei dem das Fahrzeuggespann nicht mehr ausreichend beherrschbar ist. Im Falle, dass bei der Überprüfung eine Kollision festgestellt wurde, kann beispielsweise vorgesehen sein, dass die ermittelte Soll-Trajektorie nicht befahren wird.

Bevorzugt umfasst das Überprüfen der Soll-Trajektorie auf Kollisionen mit wenigstens einem Merkmal der Umgebung ein Ermitteln eines Aufenthaltsbereiches des Zugfahrzeugs und des Anhängers ausgehend von der Soll-Trajektorie und ein Überprüfen, ob sich wenigstens ein Merkmal der Umgebung in diesem Aufenthaltsbereich befindet. Um den Aufenthaltsbereich des Zugfahrzeugs und des Anhängers auf der Soll-Trajektorie zu ermitteln, wird davon ausgegangen, dass der Anhänger der Soll-Trajektorie folgt. Da das Zugfahrzeug genutzt wird, um den Anhänger zu steuern, kann nicht davon ausgegangen werden, dass das Zugfahrzeug sich immer auf der Soll-Trajektorie befindet. Deswegen wird die Position des Zugfahrzeuges über den Winkel zum Anhänger ermittelt. Es kann vorzugsweise davon ausgegangen werden, dass der Winkel zwischen Zugfahrzeug und Anhänger auf Segmenten mit konstanter Krümmung (Geradenabschnitten und Kreisbögen) dem Idealwinkel entspricht, der notwendig ist, um die entsprechende Krümmung zu fahren. Auf Klothoidenabschnitten wird der Winkel zwischen Zugfahrzeug und Anhänger linear interpoliert. Dadurch lassen sich die Position und daraus der Aufenthaltsbereich des Zugfahrzeugs ermitteln. Im Anschluss wird überprüft, ob sich wenigstens ein Merkmal der Umgebung in diesem Aufenthaltsbereich befindet. Dies führt dazu, dass Kollisionen des Fahrzeuggespanns mit Merkmalen der Umgebung erkannt werden können.

Grundsätzlich kann im Falle, dass bei der Überprüfung der Soll-Trajektorie eine Kollision festgestellt wurde, vorgesehen sein, dass die ermittelte Soll-Trajektorie nicht befahren wird. Bevorzugt umfasst das Verfahren ein Ermitteln einer alternativen Soll-Trajektorie. Wenn beim Überprüfen der Soll-Trajektorie eine Kollision mit wenigstens einem Merkmal der Umgebung festgestellt wird, kann die alternative Soll-Trajektorie ermittelt werden. Diese wird ebenfalls auf Kollisionen mit wenigstens einem Merkmal einer Umgebung des Fahrzeuggespanns überprüft. Dadurch wird sichergestellt, dass auch nur Soll-Trajektorien befahren werden, die nicht zu einer Kollision mit einem Merkmal der Umgebung führen. Gemäß einer bevorzugten Weiterbildung der Erfindung umfasst das Erstellen des wenigstens einen Trajektorienabschnitt ein Erstellen wenigstens eines Trajektorienabschnitts von einem Fahrzeugrechensystem im Zugfahrzeug. Dies führt dazu, dass der wenigstens eine Trajektorienabschnitt autark von dem Fahrzeugrechensystem im Zugfahrzeug erstellt werden kann, und die Erstellung so unabhängig vom Aufenthaltsort des Zugfahrzeugs durchgeführt werden kann.

Gemäß einer bevorzugten Weiterbildung der Erfindung umfasst das Erstellen des wenigstens einen Trajektorienabschnitts ein Empfangen wenigstens eines Trajektorienabschnitts von einem Serverrechensystem außerhalb des Zugfahrzeugs. In der Regel verfügt ein Serverrechensystem über mehr Rechenleistung und das Erstellen des wenigstens einen Trajektorienabschnitts kann dadurch schneller durchgeführt werden. Durch diese Maßnahme wird auch auf dem Fahrzeugrechensystem Rechenkapazität frei, die anderweitig genutzt werden kann. Für den Fall, dass das Zugfahrzeug sich nicht mit einem Serverrechensystem außerhalb des Zugfahrzeugs verbinden kann, weil es sich beispielsweise an einem Ort befindet, wo die Verbindung nicht aufgebaut werden kann, kann vorgesehen sein, dass der wenigstens eine Trajektorienabschnitt von einem Fahrzeugrechensystem im Fahrzeug ermittelt wird.

Ein weiterer Aspekt der Erfindung ist ein Verfahren zum Rangieren eines Fahrzeuggespanns umfassend das Verfahren zum Ermitteln einer Soll-Trajektorie nach obigem Verfahren und einen Schritt zur Durchführung des Rangiervorganges mit einer Trajektorienfolgeregelung zur Regelung des Anhängers auf der Soll-Trajektorie. Beim rückwärtigen Rangieren des Fahrzeuggespanns schiebt das Zugfahrzeug den Anhänger. Dies führt dazu, dass auch bei gerader Rückwärtsfahrt immer wieder die Position des Anhängers durch Lenkbewegungen des Zugfahrzeuges angepasst werden muss. Um sicherzustellen, dass der Anhänger der geplanten Soll-Trajektorie folgt, wird die Trajektorienfolgeregelung eingesetzt.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt
- Fig. 1: eine schematische Darstellung eines Rangiervorganges eines Fahrzeuggespanns mit einer Soll-Trajektorie, die einen Trajektorienabschnitt umfasst,
- Fig. 2: eine schematische Darstellung eines Rangiervorganges eines Fahrzeuggespanns mit Soll-Trajektorie mit einer Mehrzahl einzelner Segmente,
- Fig. 3: eine schematische Darstellung eines Fahrzeuggespanns mit Abmessungen des Anhängers, des Zugfahrzeugs und der Gelenkkupplung und einem Winkel zwischen Zugfahrzeug und Anhänger,
- Fig. 4: eine schematische Darstellung eines Rangiervorganges eines Fahrzeuggespanns mit Soll-Trajektorie und Bereich des Zugfahrzeugs und Anhängers, und
- Fig. 5: eine schematische Darstellung eines Zugfahrzeugs mit Fahrunterstützungssystem.

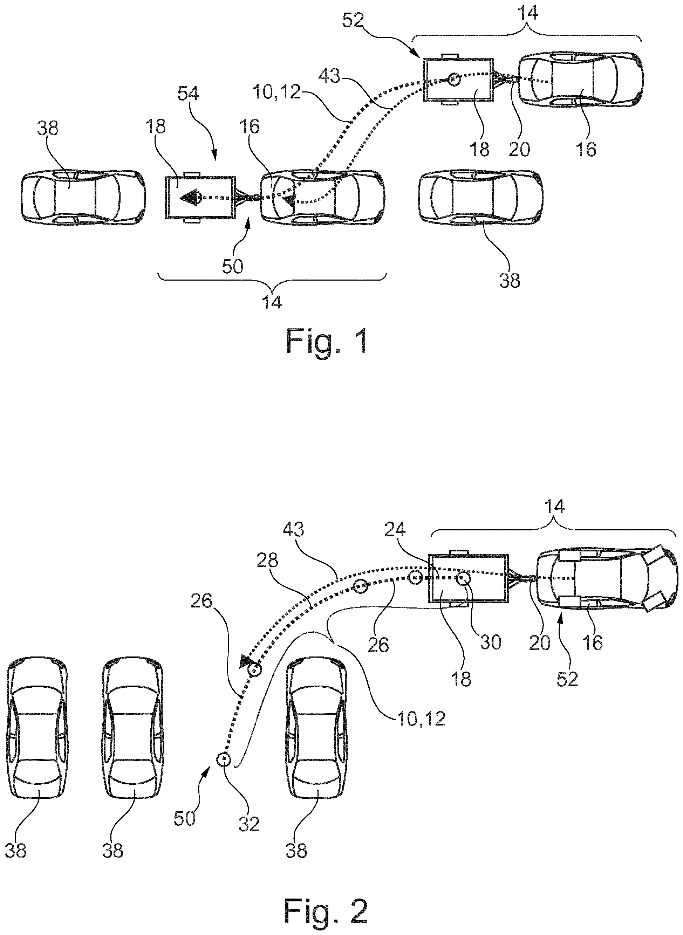

Figuren 1 bis 4 betreffen eine beispielshafte Durchführung eines Verfahren zum Rangieren eines Fahrzeuggespanns 14, das das Verfahren zum Ermitteln der Soll-Trajektorie 10 einsetzt in Übereinstimmung mit einer nicht erfindungsgemäßen ersten Ausführungsform.

Vorliegend umfasst das Fahrzeuggespann 14, ein Zugfahrzeug 16 und einen Anhänger 18, die über eine Gelenkkupplung 20 miteinander verbunden sind. Das Fahrzeuggespann 14 befindet sich vor einer Parklücke 50, um einen parallelen Parkvorgang durchzuführen (Figur 1). Bei einem parallelen Parkvorgang wird das Fahrzeuggespann 14 parallel zu seiner aktuellen Fahrtrichtung geparkt, so dass die Soll-Trajektorie 10 eine S-Form umfasst.

Es können auch Quer-Parkvorgänge durchgeführt werden, wie beispielsweise in Figur 2 dargestellt ist. Hierbei umfasst die Soll-Trajektorie 10 eine L-Form.

Die Soll-Trajektorie 10 führt das Fahrzeuggespann 14 von einer Startposition 52 in eine Zielposition 54 innerhalb der Parklücke 50. Dabei werden Merkmale 38 der Umgebung, wie beispielsweise andere Fahrzeuge, in die Ermittlung der Soll-Trajektorie 10 mit einbezogen.

Das Verfahren ermittelt eine Soll-Trajektorie 10, die hier beispielhaft mit genau einem Trajektorienabschnitt 12 bestimmt ist. Der Rangiervorgang, in diesem Fall ein Einparkvorgang erfolgt somit nicht erfindungsgemäß in einem Zug entlang dieses Trajektorienabschnitts 12.

Die Soll-Trajektorie 10 ist für den parallelen Parkvorgang beispielhaft in Figur 1 gezeigt, für den Quer-Parkvorgang beispielhaft in Figur 2. Da das Zugfahrzeug 16 genutzt wird, um den Anhänger 18 zu kontrollieren, befindet sich das Zugfahrzeug 16 nicht immer auf der Soll-Trajektorie 10, sondern bewegt sich auf einer eigenen Bahn 43.

Das hier beschriebene bevorzugte Ausführungsbeispiel des Verfahrens sieht vor, dass der Trajektorienabschnitt 12 aus Segmenten 24, 26, 28 besteht, wie exemplarisch in Figur 2 dargestellt ist. Die Segmente 24, 26, 28 umfassen Geradenabschnitte 24, Klothoidenabschnitte 26 und Kreisbögen 28. Für den Fall des Quer-Parkens reiht das Verfahren die Segmente 24, 26, 28 in der Reihenfolge Geradenabschnitte 24, Klothoidenabschnitt 26, Kreisbogen 28, Klothoidenabschnitt 26 aneinander, wie in Figur 2 gezeigt.

Für den parallelen Parkvorgang kann die Reihenfolge der Segmente 24, 26, 28 beispielsweise wie folgt sein: Geradenabschnitt 24, Klothoidenabschnitt 26, Klothoidenabschnitt 26, Geradenabschnitt 24. Alternativ kann die Reihenfolge für den parallelen Parkvorgang wie folgt sein: Geradenabschnitt 24, Klothoidenabschnitt 26, Kreisbogen 28, Klothoidenabschnitt 26, Geradenabschnitt 24, Klothoidenabschnitt 26, Kreisbogen 28, Klothoidenabschnitt 26, Geradenabschnitt 24.

Durch diese Aneinanderreihung der angegebenen Segmente 24, 26, 28 wird der Trajektorienabschnitt 12 gebildet. Der Trajektorienabschnitt 12 ist zwischen seinem Anfangspunkt 30 und seinem Endpunkt 32 differenzierbar, das heißt er weist keine Knicke und/oder Lücken auf. Der Trajektorienabschnitt 12 weist ebenfalls einen stetigen Krümmungsverlauf auf. Dies ist der Fall, da ein Kreisbogen 28 nicht direkt an einen Geradenabschnitt 24, sondern an einen Klothoidenabschnitt 26 grenzt.

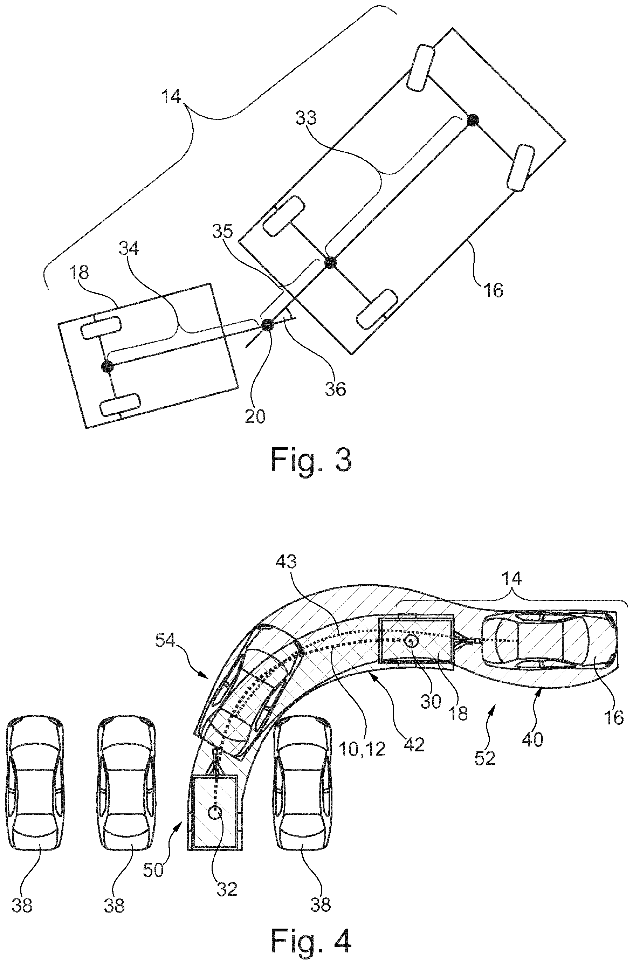

Bei den verwendeten Kreisbögen 28 und Klothoidenabschnitte 26 ist der Absolutbetrag der Krümmung überall kleiner ist als ein Wert, der von den jeweiligen Abmessungen 33 des Zugfahrzeugs 16, Abmessungen 34 des Anhängers 18 und Abmessungen 35 der Gelenkkupplung 20 abhängt, die in Figur 3 dargestellt sind. Die Abmessung 33 des Zugfahrzeugs 16 ist insbesondere der Abstand zwischen seiner Vorderradachse und seiner Hinterradachse. Die Abmessung 34 des Anhängers 18 ist insbesondere der Abstand zwischen einer Achse des Anhängers 18 und der Gelenkkupplung 20. Die Abmessung 35 der Gelenkkupplung 20 ist beispielsweise ein Abstand zwischen der Hinterradachse des Zugfahrzeugs 16 und der Gelenkkupplung 20.

Bei den verwendeten Klothoidenabschnitte 26 ist der Absolutbetrag der Änderung der Krümmung kleiner ist als ein Wert, der von den jeweiligen Abmessungen 33 des Anhängers 18, Abmessungen 34 des Zugfahrzeugs 16 und Abmessungen 35 der Gelenkkupplung 20, sowie vom Winkel 36 zwischen Anhänger 18 und Zugfahrzeug 16 auf dem vorhergehenden Segment 24, 26, 28 abhängt, die in Figur 3 dargestellt sind. Der Winkel 36 zwischen Zugfahrzeug 16 und Anhänger 18 entspricht auf Segmenten 24, 26, 28 mit konstanter Krümmung (Geradenabschnitte 24 und Kreisbögen 28) einem Idealwinkel, der notwendig ist, um die entsprechende Krümmung zu fahren. Auf Klothoidenabschnitten 26 wird der Winkel 36 zwischen Zugfahrzeug 16 und Anhänger 18 linear interpoliert.

Das vorliegend beschriebene bevorzugte Ausführungsbeispiel des Verfahrens umfasst einen Schritt zur Überprüfung der Soll-Trajektorie 10 auf Kollisionen mit wenigstens einem Merkmal 38 der Umgebung des Fahrzeuggespanns 14. Dazu werden ein Aufenthaltsbereich 40 des Zugfahrzeugs 16 sowie ein Aufenthaltsbereich 42 des Anhängers 18 ermittelt, die beide in Figur 4 gezeigt sind. Zum Ermitteln des Aufenthaltsbereichs 42 des Anhängers 18 wird davon ausgegangen, dass der Anhänger 18 der Soll-Trajektorie 10 folgt. Da das Zugfahrzeug 16 genutzt wird, um den Anhänger 18 zu kontrollieren, bewegt sich das Zugfahrzeug 16 nicht immer entlang der Soll-Trajektorie 10, sondern auf einer eigenen Bahn 43. Deswegen wird die Position des Zugfahrzeuges 16 über den Winkel 36 zum Anhänger 18 ermittelt.

Der Winkel 36 zwischen Zugfahrzeug 16 und Anhänger 18 entspricht auf Segmenten 24, 26, 28 mit konstanter Krümmung (Geradenabschnitte 24 und Kreisbögen 28) dem Idealwinkel, der notwendig ist, um die entsprechende Krümmung zu fahren. Auf Klothoidenabschnitten 26 wird der Winkel 36 zwischen Zugfahrzeug 16 und Anhänger 18 linear interpoliert. Über den Winkel 36 lässt sich die Position und daraus der Aufenthaltsbereich 40 des Zugfahrzeugs 16 ermitteln. Im Anschluss wird überprüft, ob sich wenigstens ein Merkmal 38 der Umgebung, wie hier andere Fahrzeuge, in den Aufenthaltsbereichen 40 und 42 befindet. Dadurch lassen sich Kollisionen des Fahrzeuggespanns 14 mit Merkmalen 38 der Umgebung erkennen. Bevorzugt wird eine alternative Soll-Trajektorie 10 ermittelt, wenn beim Überprüfen der Soll-Trajektorie 10 eine Kollision mit wenigstens einem Merkmal 38 der Umgebung festgestellt wird. Dadurch wird sichergestellt, dass nur Soll-Trajektorien 10 befahren werden, die nicht zu einer Kollision mit einem Merkmal 38 der Umgebung führen.

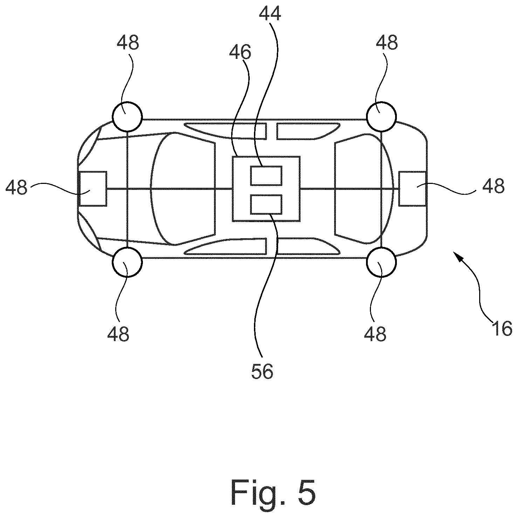

Vorliegend wird das Erstellen der Soll-Trajektorie 10 mit dem Trajektorienabschnitt 12 von einem Fahrzeugrechensystem 44 im Zugfahrzeug 16 durchgeführt. Die Figur 5 zeigt eine schematische Darstellung des Zugfahrzeugs 16 mit einem Fahrzeugrechensystem 44.

In einem nicht erfindungsgemäßen Ausführungsbeispiel ist ein Fahrunterstützungssystem 46 vorgesehen, wie in Figur 5 gezeigt. Das Fahrunterstützungssystem 46 umfasst einen Umgebungssensor 48, zum Erfassen von Merkmalen 38 der Umgebung. Des Weiteren umfasst das Fahrunterstützungssystem 46 ein Fahrzeugrechensystem 44, zur Ermittlung der Soll-Trajektorie 10. Ebenfalls umfasst das Fahrunterstützungssystem 46 im vorliegend beschriebenen Ausführungsbeispiel eine Trajektorienfolgeregelung 56 zur Regelung des Anhängers 18 auf der Soll-Trajektorie 10.

### Bezugszeichenliste

- 10: Soll-Trajektorie
- 12: Trajektorienabschnitt
- 14: Fahrzeuggespann
- 16: Zugfahrzeug
- 18: Anhänger
- 20: Gelenkkupplung
- 24: Segment, Geradenabschnitt
- 26: Segment, Klothoidenabschnitt
- 28: Segment, Kreisbogen
- 30: Anfangspunkt des Trajektorienabschnitts
- 32: Endpunkt des Trajektorienabschnitts
- 33: Abmessung des Zugfahrzeugs
- 34: Abmessung des Anhängers
- 35: Abmessung der Gelenkkupplung
- 36: Winkel zwischen dem Anhänger und dem Zugfahrzeug
- 38: Merkmal der Umgebung
- 40: Aufenthaltsbereich des Zugfahrzeugs
- 42: Aufenthaltsbereich des Anhängers
- 43: Bahn des Zugfahrzeugs
- 44: Fahrzeugrechensystem
- 46: Fahrunterstützungssystem
- 48: Umgebungssensor
- 50: Parklücke
- 52: Startposition
- 54: Zielposition
- 56: Trajektorienfolgeregelung

## Patentansprüche

1. Verfahren zum Ermitteln einer Soll-Trajektorie (10) mit wenigstens einem Trajektorienabschnitt (12) für die Durchführung eines Rangiervorganges mit einem Fahrzeuggespann (14), das ein Zugfahrzeug (16) und einen Anhänger (18), die über eine Gelenkkupplung (20) miteinander verbunden sind, aufweist, wobei die Soll-Trajektorie (10) eine Soll-Trajektorie (10) für den Anhänger (18) ist, das Verfahren umfassend
einen Schritt zum Erstellen wenigstens eines Trajektorienabschnitts (12), wobei das Erstellen des wenigstens einen Trajektorienabschnitts (12) ein Aneinanderreihen von Segmenten (24, 26, 28) umfasst, wobei die Segmente (24, 26, 28) Geradenabschnitte (24), Klothoidenabschnitte (26) und/oder Kreisbögen (28) umfassen, und
das Erstellen des wenigstens einen Trajektorienabschnitts (12) ein Erstellen eines zwischen einem jeweiligen Anfangs- (30) und Endpunkt (32) differenzierbaren Trajektorienabschnitts (12) mit einem stetigen Krümmungsverlauf umfasst, **dadurch gekennzeichnet, dass**
das Ermitteln der Soll-Trajektorie (10) ein Erstellen von einer Mehrzahl von verbundenen Trajektorienabschnitten (12) zum Rangieren in mehreren Zügen umfasst.

2. Verfahren nach Anspruch 1, **dadurch gekennzeichnet, dass**
das Erstellen des wenigstens einen Trajektorienabschnitts (12) ein Verwenden von Kreisbögen (28) und Klothoidenabschnitten (26) umfasst, wobei deren Absolutbetrag ihrer Krümmung überall kleiner ist als ein Wert, der von wenigstens einer Abmessung (33) des Zugfahrzeugs (16), von wenigstens einer Abmessung (34) des Anhängers (18) und/oder von wenigstens einer Abmessung (35) der Gelenkkupplung (20) abhängt.

3. Verfahren nach einem der vorangehenden Ansprüche, **dadurch gekennzeichnet, dass**
das Erstellen des wenigstens einen Trajektorienabschnitts (12) ein Verwenden von Klothoidenabschnitten (26) umfasst, wobei ein Absolutbetrag einer Änderung ihrer Krümmung kleiner ist als ein Wert, der von wenigstens einer Abmessung (33) des Zugfahrzeugs (16), von wenigstens einer Abmessung (34) des Anhängers (18) und von wenigstens einer Abmessung (35) der Gelenkkupplung (20) und/oder vom Winkel (36) zwischen dem Anhänger (18) und dem Zugfahrzeug (16) auf einem vorherigen Segment (24, 26, 28) abhängt.

4. Verfahren nach einem der vorangehenden Ansprüche, **dadurch gekennzeichnet, dass**
das Verfahren einen Schritt zum Überprüfen der Soll-Trajektorie (10) auf Kollisionen mit wenigstens einem Merkmal (38) einer Umgebung des Fahrzeuggespanns (14) umfasst.

5. Verfahren nach Anspruch 4, **dadurch gekennzeichnet, dass**
das Überprüfen der Soll-Trajektorie (10) auf Kollisionen mit wenigstens einem Merkmal (38) der Umgebung
ein Ermitteln eines Aufenthaltsbereiches (40, 42) des Zugfahrzeugs (16) und des Anhängers (18) ausgehend von der Soll-Trajektorie (10) und
ein Überprüfen, ob sich wenigstens ein Merkmal (38) der Umgebung in diesem Aufenthaltsbereich (40, 42) befindet, umfasst.

6. Verfahren nach Anspruch 4 oder 5, **dadurch gekennzeichnet, dass**
das Verfahren ein Ermitteln einer alternativen Soll-Trajektorie (10) umfasst, wenn beim Überprüfen der Soll-Trajektorie (10) eine Kollision mit wenigstens einem Merkmal (38) der Umgebung festgestellt wird.

7. Verfahren nach einem der vorangehenden Ansprüche, **dadurch gekennzeichnet, dass**
das Erstellen des wenigstens einen Trajektorienabschnitts (12) ein Erstellen wenigstens eines Trajektorienabschnitts (12) von einem Fahrzeugrechensystem (44) im Zugfahrzeug (16) umfasst.

8. Verfahren nach einem der vorangehenden Ansprüche, **dadurch gekennzeichnet, dass**
das Erstellen des wenigstens einen Trajektorienabschnitts (12) ein Empfangen wenigstens eines Trajektorienabschnitts (12) von einem Serverrechensystem außerhalb des Zugfahrzeugs (16) umfasst.

9. Verfahren zum Rangieren eines Fahrzeuggespanns (14) umfassend
das Verfahren zum Ermitteln einer Soll-Trajektorie (10) nach Anspruch 1-8 und einen Schritt zur Durchführung des Rangiervorganges mit einer Trajektorienfolgeregelung (56) zur Regelung des Anhängers (18) auf der Soll-Trajektorie (10).

## Claims

1. Method for ascertaining a setpoint trajectory (10) having at least one trajectory section (12) for performing a manoeuvring procedure with a vehicle combination (14) comprising a towing vehicle (16) and a trailer (18) that are connected to one another by an articulated coupling (20), wherein the setpoint trajectory (10) is a setpoint trajectory (10) for the trailer (18), the method comprising
a step of creating at least one trajectory section (12), wherein creating the at least one trajectory section (12) comprises juxtaposing segments (24, 26, 28), wherein the segments (24, 26, 28) comprise straight sections (24), clothoid sections (26) and/or arcs (28), and
creating the at least one trajectory section (12) comprises creating a trajectory section (12), able to be differentiated between a respective starting point (30) and end point (32), having a constant curved profile, **characterized in that**
ascertaining the setpoint trajectory (10) comprises creating a plurality of connected trajectory sections (12) for manoeuvring in multiple moves.

2. Method according to Claim 1, **characterized in that**
creating the at least one trajectory section (12) comprises using arcs (28) and clothoid sections (26), wherein their absolute value of their curvature is smaller overall than a value that depends on at least one dimension (33) of the towing vehicle (16), on at least one dimension (34) of the trailer (18) and/or on at least one dimension (35) of the articulated coupling (20).

3. Method according to either of the preceding claims, **characterized in that**
creating the at least one trajectory section (12) comprises using clothoid sections (26), wherein an absolute value of a change in their curvature is less than a value that depends on at least one dimension (33) of the towing vehicle (16), on at least one dimension (34) of the trailer (18) and on at least one dimension (35) of the articulated coupling (20) and/or on the angle (36) between the trailer (18) and the towing vehicle (16) on a previous segment (24, 26, 28).

4. Method according to one of the preceding claims, **characterized in that**
the method comprises a step of checking the setpoint trajectory (10) for collisions with at least one feature (38) in an environment of the vehicle combination (14).

5. Method according to Claim 4, **characterized in that**
checking the setpoint trajectory (10) for collisions with at least one feature (38) in the environment comprises
ascertaining an area (40, 42) occupied by the towing vehicle (16) and the trailer (18) based on the setpoint trajectory (10) and
checking whether at least one feature (38) in the environment is located in this occupied area (40, 42).

6. Method according to Claim 4 or 5, **characterized in that**
the method comprises ascertaining an alternative setpoint trajectory (10) when a collision with at least one feature (38) in the environment is established when checking the setpoint trajectory (10).

7. Method according to one of the preceding claims, **characterized in that**
creating the at least one trajectory section (12) comprises a vehicle computer system (44) in the towing vehicle (16) creating at least one trajectory section (12) .

8. Method according to one of the preceding claims, **characterized in that**
creating the at least one trajectory section (12) comprises receiving at least one trajectory section (12) from a server computer system outside the towing vehicle (16) .

9. Method for manoeuvring a vehicle combination (14) comprising
the method for ascertaining a setpoint trajectory (10) according to Claim 1-8 and a step of performing the manoeuvring procedure with trajectory follower control (56) in order to control the trailer (18) on the setpoint trajectory (10).

## Revendications

1. Procédé permettant de déterminer une trajectoire de consigne (10) comprenant au moins une section de trajectoire (12), destiné à l'exécution d'une manœuvre avec un attelage de véhicule (14) qui présente un véhicule tracteur (16) et une remorque (18) qui sont reliés ensemble par un accouplement articulé (20), la trajectoire de consigne (10) étant une trajectoire de consigne (10) pour la remorque (18), le procédé comprenant
une étape de création d'au moins une section de trajectoire (12), la création de ladite au moins une section de trajectoire (12) comprenant un enchaînement de segments (24, 26, 28), les segments (24, 26, 28) comprenant des sections de droite (24), des sections de clothoïde (26) et/ou des arcs de cercle (28), et
la création de ladite au moins une section de trajectoire (12) comprend une création d'une section de trajectoire (12) ayant un gradient de courbure continu et pouvant être différenciée entre un point initial (30) et un point final (32) respectif,
**caractérisé en ce que** la détermination de la trajectoire de consigne (10) comprend une création d'une pluralité de sections de trajectoire (12) reliées pour des manœuvres en plusieurs phases.

2. Procédé selon la revendication 1, **caractérisé en ce que** la création de ladite au moins une section de trajectoire (12) comprend une utilisation d'arcs de cercle (28) et de sections de clothoïde (26), la valeur absolue de leur courbure étant partout inférieure à une valeur qui dépend d'au moins une dimension (33) du véhicule tracteur (16), d'au moins une dimension (34) de la remorque (18) et/ou d'au moins une dimension (35) de l'accouplement articulé (20).

3. Procédé selon l'une quelconque des revendications précédentes, **caractérisé en ce que** la création de ladite au moins une section de trajectoire (12) comprend une utilisation de sections de clothoïde (26), une valeur absolue d'un changement de leur courbure étant inférieure à une valeur qui dépend d'au moins une dimension (33) du véhicule tracteur (16), d'au moins une dimension (34) de la remorque (18) et d'au moins une dimension (35) de l'accouplement articulé (20) et/ou de l'angle (36) entre la remorque (18) et le véhicule tracteur (16) sur un segment précédent (24, 26, 28).

4. Procédé selon l'une quelconque des revendications précédentes, **caractérisé en ce que** le procédé comprend une étape de vérification de la trajectoire de consigne (10) quant à des collisions avec au moins une caractéristique (38) d'un environnement de l'attelage de véhicule (14).

5. Procédé selon la revendication 4, **caractérisé en ce que**
la vérification de la trajectoire de consigne (10) quant à des collisions avec au moins une caractéristique (38) de l'environnement comprend
une détermination d'une zone de séjour (40, 42) du véhicule tracteur (16) et de la remorque (18) en partant de la trajectoire de consigne (10), et
une vérification si au moins une caractéristique (38) de l'environnement se trouve dans cette zone de séjour (40, 42).

6. Procédé selon la revendication 4 ou 5, **caractérisé en ce que** le procédé comprend une détermination d'une trajectoire de consigne (10) alternative lorsqu'une collision avec au moins une caractéristique (38) de l'environnement est constatée lors de la vérification de la trajectoire de consigne (10) .

7. Procédé selon l'une quelconque des revendications précédentes, **caractérisé en ce que** la création de ladite au moins une section de trajectoire (12) comprend une création d'au moins une section de trajectoire (12) par un système informatique de véhicule (44) sur le véhicule tracteur (16).

8. Procédé selon l'une quelconque des revendications précédentes, **caractérisé en ce que** la création de ladite au moins une section de trajectoire (12) comprend une réception d'au moins une section de trajectoire (12) d'un système serveur informatique à l'extérieur du véhicule tracteur (16).

9. Procédé permettant de manœuvrer un attelage de véhicule (14), comprenant le procédé permettant de déterminer une trajectoire de consigne (10) selon les revendications 1 à 8 et une étape d'exécution de la manœuvre avec une régulation de suivi de trajectoire (56) pour réguler la remorque (18) sur la trajectoire de consigne (10).
